# EUROPEAN PATENT APPLICATION

(11) **EP 1 681 759 A2**
(43) Date of publication of application: **19.07.2006**
(21) Application number: 06075079.1
(22) Date of filing: 12.01.2006
(51) Int. Cl.: H02K 49/02

(54) **Alternator for vehicles with movement transmission device comprising an induction coupling**

(30) Priority: 14.01.2005 IT MI20050005 U
(71) Applicant: Baruffaldi S.p.A., 20097 San Donato Milanese, Milan (IT)
(72) Inventor: Boffelli, Piercarlo, Milano (IT)
(74) Representative: Raimondi, Margherita

(57) **Abstract**

Alternator (10) for engines, in particular of vehicles, comprising a device for transmitting a rotating movement from movement generating means to a driven shaft (1), said transmission device comprising at least one induction coupling (200;1200) arranged between said movement generating means and the driven shaft (1).

## Description

The present invention relates to a device for controlling the current generating means for engines, in particular of vehicles.

It is known in the sector relating to the production of vehicle engines that there exists the need to mount on the said engines an alternator for generating alternating current, necessary for operation of the electrical parts of the vehicle.

It is also known that said alternator comprises a stator, which is normally mounted on a fixed support, and a rotor mounted on a shaft, in turn mounted on a bearing integral with the stator.

The rotor shaft is rotationally driven by means of a pulley which receives movement from a drive belt connected to the driving shaft.

Although performing their function, the alternators of the known type nevertheless have the drawback arising from the fact that the mechanical system for transmission of the movement from the driving shaft to the alternator shaft inevitably also transmits all the speed/torque peaks affecting the driving shaft as a result of the cycle of the four-stroke engine.

In addition to the said direct transmission of the peaks, transmission of the said peaks also occurs in the reverse direction (from the alternator to the driving shaft), said transmission, owing to the high inertia of the alternator, being imparted to the driving shaft as the square of the transmission ratio, multiplied by the said ratio, this resulting overall in the need to:
- design the driving shaft and the kinematic chain for transmission of the movement with larger dimensions;
- design the alternator with smaller dimensions.

This need, however, conflicts with the more recent requirements for increasingly smaller and more efficient engines, able to reduce consumption and pollution levels, and alternators which are increasingly more powerful, able to satisfy the increased demand for current resulting from the introduction of the various auxiliary devices of the vehicle.

The technical problem which is posed, therefore, is that of providing a device for controlling vehicle alternators, which allows operation thereof such as to reduce drastically the speed/torque peaks which are transmitted to/from the pulley actuating the alternator shaft.

In connection with this problem it is also required that this device should have small radial and axial dimensions, but at the same time should be able to produce high torques also at a low speed of rotation of the engine so as to be applicable also to high-capacity alternators mounted on heavy vehicles with a low number of revolutions.

It is also required that the device should be easy and inexpensive to produce and assemble and should be able to be mounted on the body of conventional alternators without the need for special adaptation.

These results are achieved according to the present invention by an alternator comprising a device for transmitting the rotating movement from movement generating means to the driven shaft, having at least one induction coupling arranged between said movement generating means and the driven shaft.

Further details may be obtained from the following description of a non-limiting example of embodiment of the object of the present invention provided with reference to the accompanying drawings, in which:
- Figure 1 shows a partially sectioned view of an example of embodiment of the alternator with a transmission device according to the present invention: and
- Figure 2 shows a view, similar to that of Fig. 1, of a second example of embodiment of the alternator with a device according to the present invention.

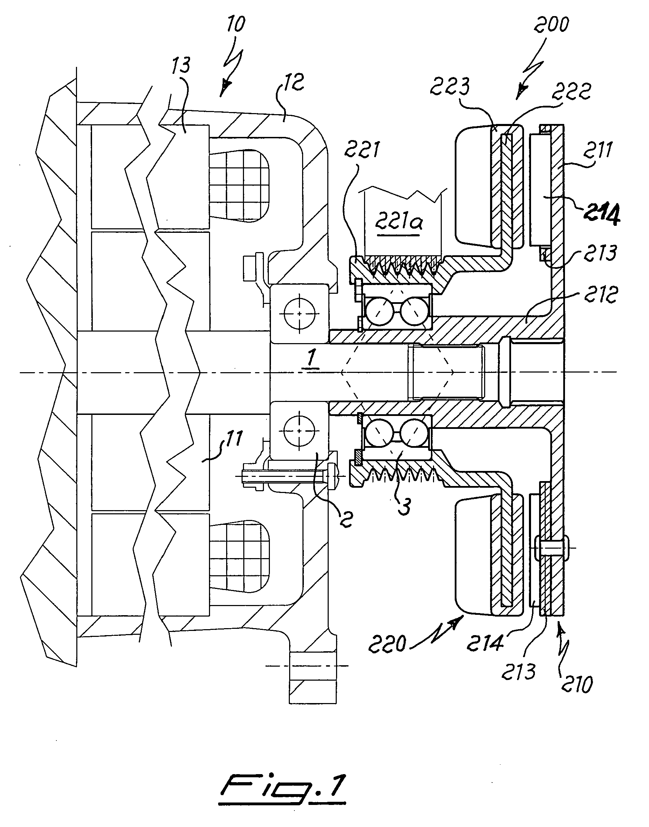

As shown in Fig. 1, the rotor 11 of an alternator 10 is mounted on a first end of a driven shaft 1 supported by a bearing 2 integral with the supporting assembly 12 of the alternator and the stator 13.

The shaft 1 extends towards the outside of the alternator so as to support a bearing 3 and a first part 210 of an induction coupling 200, the other part 220 of which is in the form of a pulley 221 mounted on the outer race of the bearing 3 and connected to the driving shaft (not shown) by means of a drive belt 221a.

In more detail, said first part 210 of the coupling is in the form of a disk 211 with a central sleeve 212, coaxially constrained to the driven shaft 1; a retaining ring 213, which is made of non-magnetic material and seats permanent magnets 214, is fixed to the inner surface of the disk 211.

The said second part 220 of the coupling 200 comprises an annular flange 222 made of non-conductive material and integral with the pulley 221; an annular part 223 made of non-magnetic material, such as pressure-cast aluminium for example, is constrained onto the circumferential edge of the flange 222.

With this configuration, the annular part 223 forms the rotor part generating the movement of the coupling 200 which, by means of the flange 222 and the permanent magnets 214, causes the generation of Foucault currents resulting in induction linkage with the driven disk 211, which is rotationally driven, causing rotation of the rotor 11 of the alternator 10.

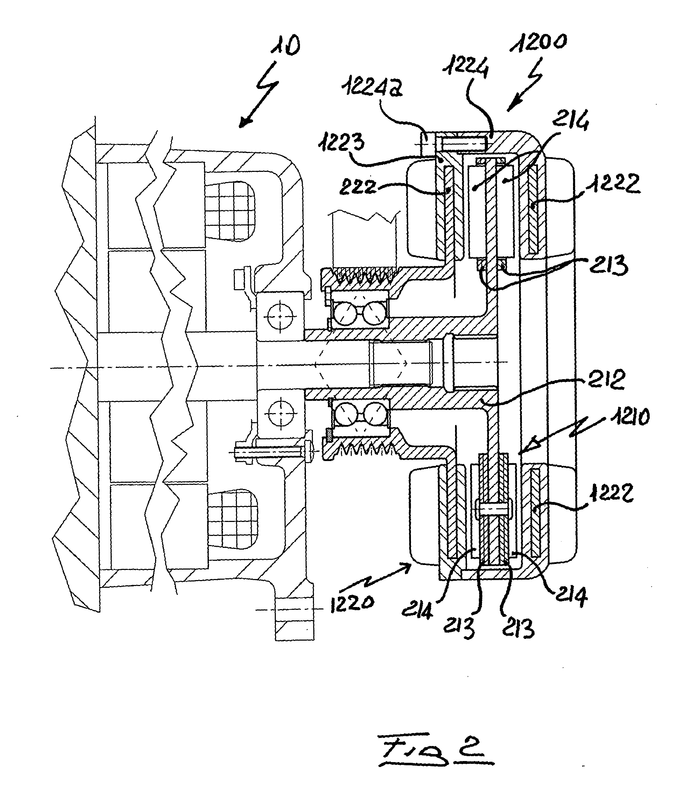

A shown in Fig. 2, the actuating device may be of the multiple type in order to increase the torque values which may be transmitted to the alternator.

In this configuration it is envisaged that the disk 211 of the first part 1210 of the coupling has a retaining ring 213 which is made of non-magnetic material and seats permanent magnets 214 also fixed onto the outer surface of the disk 211, axially opposite the inner surface.

Correspondingly the outer edge of the annular part 1223 of the second part 1200 of the coupling has holes 1223a for receiving screw means 1224a able to engage with corresponding female threads provided on the front edge of a bell member 1224 axially coupled to the said annular part 1223 and made of non-magnetic material.

An annular flange 1222, which is made of conductive material and is situated axially opposite the permanent magnets 214 of the outer surface of the disk 211, is inserted in the surface of the bell member 1224 axially opposite the disk 211.

In this way the linkage action of the Foucault coupling is substantially doubled, with a consequent increase in the torque which may be transmitted to the alternator shaft.

It can therefore be seen how, by designing the induction coupling with suitable dimensions, so as to compensate for the loss in speed of the shaft 1 of the alternator, due to the relative slipping of the driven part 210 and the rotor part 220 of the induction coupling 200, it is nevertheless possible to obtain the nominal values for the torque required by the alternator, even though the latter is made to rotate without a mechanical connection between the driving shaft of the vehicle and the driven shaft 1 of the said alternator.

This essentially enables a reduction in all the speed/torque peaks which arise from anomalous operating conditions of the driving shaft and are transmitted to the alternator and from the latter back to the said driving shaft, also eliminating the need for larger dimensions of the various mechanical parts and resulting in more regular operation of the alternator, with an increase in its working life and with a more constant supply of current, thereby improving the final electrical charging performance.

In addition to this, with the alternator according to the present invention larger dimensions may be achieved in the design thereof so as to be able to satisfy the increasingly higher demand for current, irrespective of the size of the engine and the transmission ratio from the latter to the alternator.

As a result, it is also possible to limit the size of the bearing 3 which supports the pulley 221 of the alternator, resulting in a further reduction in costs.

## Claims

1. Alternator (10) for engines, in particular of vehicles, comprising a device for transmitting a rotating movement from movement generating means to a driven shaft (1), **characterized in that** said transmission device comprises at least one induction coupling (200;1200) arranged between said movement generating means and the driven shaft (1).

2. Alternator according to Claim 1, **characterized in that** said driven shaft (1) is integral with the rotor (11) of the alternator.

3. Alternator according to Claim 1, **characterized in that** said induction coupling (200;1200) is mounted on an extension of the driven shaft (1).

4. Alternator according to Claim 2, **characterized in that** said induction coupling (200) comprises a first part (210;1210) integral with the driven shaft (1) and a second part (220;1220) mounted idle on the said driven shaft.

5. Alternator according to Claim 4, **characterized in that** said first part (210;1210) of the coupling comprises a disk (211) with a central sleeve (212) coaxially constrained to the driven shaft (1).

6. Alternator according to Claim 5, **characterized in that** a retaining ring (213) which is made of non-magnetic material and seats permanent magnets (214) is fixed to the inner surface of the driven disk (211).

7. Alternator according to Claim 6, **characterized in that** a retaining ring (213) which is made of non-magnetic material and seats permanent magnets (214) is fixed to the outer surface of the driven disk (211).

8. Alternator according to Claim 7, **characterized in that** said permanent magnets (214) are arranged axially opposite each other.

9. Alternator according to Claim 4, **characterized in that** said second part (210;1210) of the coupling (200; 1200) comprises a pulley (221).

10. Alternator according to Claim 9, **characterized in that** said pulley (221) is mounted on the outer race of a bearing (3) keyed onto the driven shaft (1).

11. Alternator according to Claim 10, **characterized in that** said pulley (221) is connected to the driving shaft by means of a drive belt (221a).

12. Alternator according to Claim 9, **characterized in that** said second part (220) of the coupling (200) comprises an annular flange (222) made of conductive material and integral with the pulley (221).

13. Alternator according to Claim 12, **characterized in that** an annular part (223) made of non-magnetic material is constrained onto the circumferential edge of said annular flange (222).

14. Alternator according to Claim 7, **characterized in that** the second part (1200) of the coupling has a bell member (1224) made of non-magnetic material and axially coupled to the said annular part (1223).

15. Alternator according to Claim 14, **characterized in that** said annular part (1223) has holes (1223a) for receiving screw means (1224a) able to engage with corresponding female threads formed on the front edge of said bell member (1224).

16. Alternator according to Claim 14, **characterized in that** an annular flange (1222), which is made of conductive material and is situated axially opposite the permanent magnets (214) of the outer surface of the disk (211), is inserted in the surface of the bell member (1224) axially opposite the disk (211).
